# EUROPEAN PATENT APPLICATION

(11) **EP 4 759 847 A1**
(43) Date of publication of application: **17.06.2026**
(21) Application number: 25218955.0
(22) Date of filing: 27.11.2025
(51) Int. Cl.: C08G 18/00, C08G 18/10, C08G 18/24, C08G 18/32, C08G 18/50, C08G 18/61, C08G 18/73, C08G 18/75, C08G 18/76, C09D 175/04

(54) **EPOXY AND URETHANE COMPOSITIONS BASED ON CONTROLLABLE EXTENSION OF FLEXIBLE OLIGOMERIC DIOLS AND METHODS THEREOF**

(30) Priority: 10.12.2024 US 202463730288 P; 05.03.2025 US 202519071581
(71) Applicant: The Boeing Company, Arlington, VA 22202 (US)
(72) Inventor: NOWAK, Andrew Paul, Arlington, 22202 (US); VENTULETH, Michael Jared, Arlington, 22202 (US); NOWAK, Gregory Phillip, Arlington, 22202 (US)
(74) Representative: Harris, Jennifer Lucy

(57) **Abstract**

An extended diol composition is disclosed, which includes a first component that includes an α-ω hydroxyl terminated diol oligomer having a number average molecular weight Mn of from about 500 Da to about 100,000 Da, a multifunctional isocyanate species, and a multifunctional alcohol or amine species. Another extended diol composition is disclosed, which includes a first component that includes an α-ω hydroxyl terminated diol oligomer having a number average molecular weight Mn of from about 500 Da to about 100,000 Da, a multifunctional isocyanate species, and a multifunctional species including an alcohol-functional group and an epoxy-functional group.

## Description

### TECHNICAL FIELD

The present teachings relate generally to fabrication of epoxy and urethane polymers using flexible oligomeric diol compositions and, more particularly, to controlling and extending the molecular weight of such compositions.

### BACKGROUND

Many commercial oligomeric diols are produced in the range of 500 - 5,000 Daltons. Extension of these oligomeric diols to higher molecular weight diols is desirable in order to create more flexible materials through lowered crosslink density. Flexible oligomeric diol compositions can be used in a variety of materials or material compositions within the aerospace industry such as for coatings, seals, linings, adhesives, sealants, elastomers and the like. While precursors are available, and are more reasonably priced, some precursors can be limited by the maximum molecular weight offered.

Due to limitations in available molecular weights of many commercial oligomeric diols, such materials can be prohibitively expensive and difficult to directly synthesize. The higher molecular weight species of these materials allows formulators greater range in production of coatings, adhesives, elastomers and sealants through the lower modulus materials able to be achieved by the reduced crosslink density produced by longer diol precursors. Uses of commercially available and other oligomeric diols to fabricate other polymer systems having variable functional chemistries is an expected benefit.

Therefore, there is a need for methods to achieve higher molecular weight ranges in these precursors while maintaining diol end group functionality for further functional chemistry group modification and limiting modifications to backbone character, thus providing extended materials while maintaining flexibility and reduced cost.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

An extended diol composition is disclosed. The extended diol composition also includes a first component may include an α,ω hydroxyl terminated diol oligomer having a number average molecular weight Mn of from about 500 g/mol to about 100,000 g/mol, a multifunctional isocyanate species, and a multifunctional alcohol or amine species, and where: the α,ω hydroxyl terminated diol oligomer has a structure:

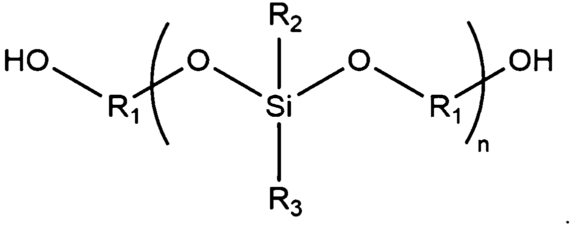

Implementations of the extended diol composition can include where the R₂ and R₃ groups of the α,ω hydroxyl terminated diol oligomer may include methyl groups, ethyl groups, propyl groups, isopropyl groups, phenyl groups, or a combination thereof, and where n is from about 1 to about 100. The R₁ group may include a polyether, a polyester, or a polysiloxane. The R₁ group may include the structure:

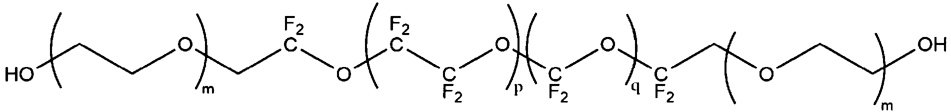

In the above formula depicting an example of R₁, m is from about 1 to 20, q is from about 5 to 200, p is defined as 5 to 200. The multifunctional isocyanate species may include toluene diisocyanate, isophorone diisocyanate, 4,4'-methylenebis(phenyl isocyanate), 4,4'-methylene-bis(cyclohexyl isocyanate), hexamethylene diisocyanate, poly(hexamethylene diisocyanate), poly(isophorone diisocyanate), or a combination thereof. A molar ratio of the multifunctional isocyanate species to the extended diol oligomer is from about 1.1 to about 10. The extended diol composition may include a catalyst, such as a tin-based catalyst. The catalyst may include dibutyl tin dilaurate or stannous octanoate. The extended diol composition may include a UV stabilizer, an antioxidant, a pigment, or a combination thereof. The multifunctional alcohol or amine species may include an amine such as triethylene tetraamine, diethylene triamine, tetraethylene pentamine, triaminononane, an aspartate ester, a polycarbamide curative, or a combination thereof.

Another extended diol composition is disclosed. The extended diol composition also includes a first component may include an α,ω hydroxyl terminated diol oligomer having a number average molecular weight Mn of from about 500 g/mol to about 100,000 g/mol, a multifunctional isocyanate species, and a multifunctional species may include an alcohol-functional group and an epoxy-functional group, and where the α,ω hydroxyl terminated diol oligomer has a structure:

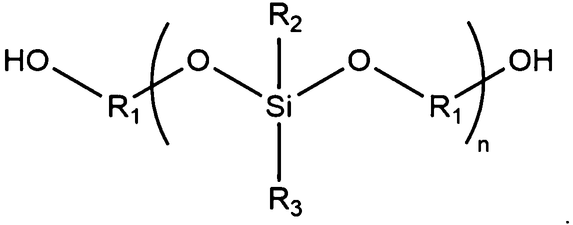

Implementations of the extended diol composition where n is as described for the α,ω hydroxyl terminated diol oligomer structure above, the R₂ and R₃ groups of the α,ω hydroxyl terminated diol oligomer may include methyl groups, ethyl groups, propyl groups, isopropyl groups, phenyl groups, or a combination thereof. The R₁ group may include a polyether, a polyester, or a polysiloxane. The R₁ group may include the structure: 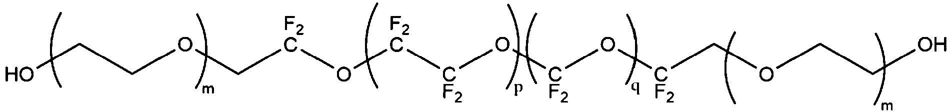 , and where m is from about 1 to about 20, p is from about 5 to about 200, q is from about 5 to about 200, and the Mn is from about 1,000 Da to about 10,000 Da. The multifunctional isocyanate species may include toluene diisocyanate, isophorone diisocyanate, 4,4'-methylenebis(phenyl isocyanate), 4,4'-methylene-bis(cyclohexyl isocyanate), hexamethylene diisocyanate, poly(hexamethylene diisocyanate), poly(isophorone diisocyanate), or a combination thereof. The extended diol composition may include a reactive diluent may include an epoxy-functional group. The extended diol composition may include a curative such as a multifunctional amine group. A molar ratio of the multifunctional isocyanate species to the extended diol oligomer is from about 1.1 to about 10.

A method of making a resin is disclosed. The method also includes providing a diol oligomer to a reaction vessel, the diol oligomer may include an α,ω hydroxyl terminated diol oligomer having a number average molecular weight Mn of from about 500 g/mol to about 100,000 g/mol. The method also includes adding a diisocyanate compound to the reaction vessel in a molar ratio of the diisocyanate compound to the α,ω hydroxyl terminated diol oligomer of about 1.1 to about 10. The method also includes heating the diol oligomer and the diisocyanate compound in an inert atmosphere at a temperature of from about 50 to about 110°C for about 1 hour to about 2 hours. The method also includes where the diol oligomer may include [-O-Si(R₂,R₃)-O-], and wherein R₂ and R₃ groups may include methyl groups, ethyl groups, propyl groups, isopropyl groups, phenyl groups, or a combination thereof.

Implementations of the method of making a resin may include dissolving the diol oligomer in a solvent. The multifunctional alcohol may include at least three alcohol functional groups. The method of making a resin may include adding reactive epoxy diluents to the reaction vessel. The method of making a resin may include adding a multifunctional species such as an alcohol-functional group and an epoxy-functional group to the reaction vessel.

The features, functions, and advantages that have been discussed can be achieved independently in various implementations or can be combined in yet other implementations further details of which can be seen with reference to the following description.

### BRIEF DESCRIPTION OF THE DRAWINGS

The accompanying drawings, which are incorporated in and constitute a part of this specification, illustrate embodiments of the present teachings and together with the description, serve to explain the principles of the disclosure. In the figures:

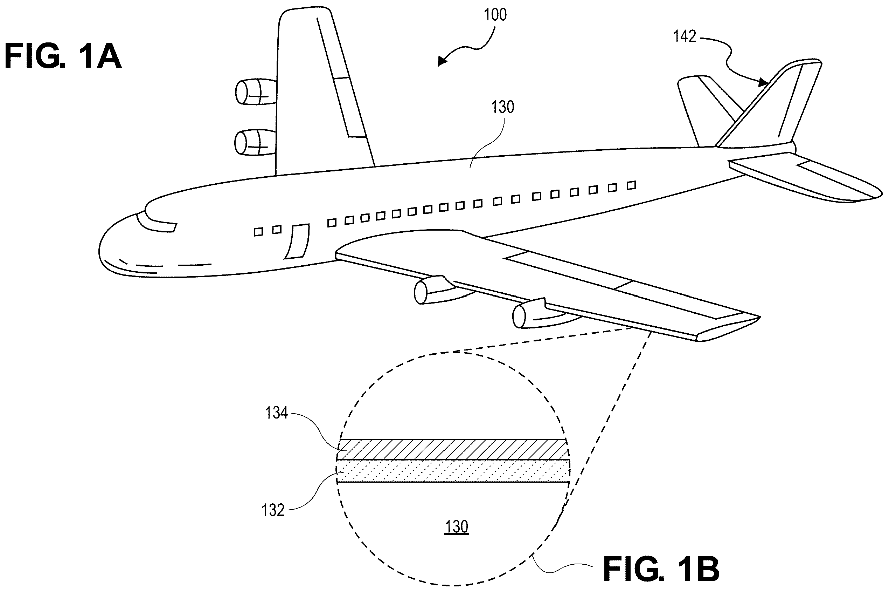

FIG. 1A depicts an application of a structural component including an exemplary extended diol composition applied to an aerospace vehicle. FIG. 1B is an exploded view of a portion of the aerospace vehicle of FIG. 1A, in accordance with the present disclosure.

It should be noted that some details of the figures have been simplified and are drawn to facilitate understanding of the present teachings rather than to maintain strict structural accuracy, detail, and scale.

### DETAILED DESCRIPTION

Many commercial oligomeric diols are produced in the range of 500 - 5,000 Daltons and can be used in coatings, adhesives, seals, linings, sealants, elastomers and the like. Extension to longer molecular weight diols is desirable in order to create more flexible materials through lowered crosslink density. The present disclosure provides an improvement to a synthetic strategy to controllably increase the number average molecular weight (Mn) of oligomeric diols, relating to examples including the use of a telechelic precursor, having a weight average molecular weight of approximately 1800 Daltons, with a structure similar to Fluorolink^{™} E10H. Higher number average molecular weight (Mn) diols, such as those from about 500 to about 100,000 Daltons, or from about 1,000 to about 100,000 Daltons, from about 2,000 to about 100,000, or from about 5,000 to about 100,000 Daltons can be incorporated into urethane or urea systems through reaction with isocyanates. Epoxy amine networks can be fabricated through reaction of the extended diols with diisocyanate followed by a modification to an epoxy end group. Certain oligomeric diols in desirable ranges for use in coatings, adhesives, sealants and elastomers are not commercially available or only offered at high cost. The present disclosure provides an alternate composition that can be extended while controlling molecular weight and structures of oligomeric diols and materials derived therefrom.

The extended diol composition also includes a first component may include an α,ω hydroxyl terminated diol oligomer having a number average molecular weight Mn of from about 500 g/mol to about 100,000 g/mol, a multifunctional isocyanate species, and a multifunctional alcohol or amine species, and where: the α,ω hydroxyl terminated diol oligomer has a structure (denoted as Structure A):

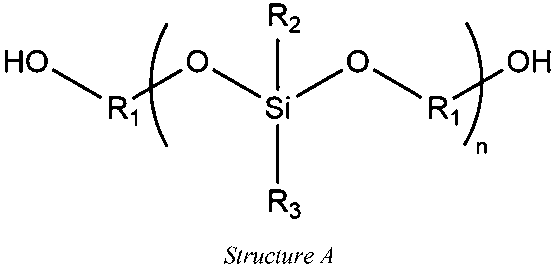

Examples of the extended diol composition include where the R₂ and R₃ groups of *Structure A* may include methyl groups, ethyl groups, propyl groups, isopropyl groups, phenyl groups, or a combination thereof. Structure A includes where n is from about 1 to about 20 and the Mn is from about 1,000 to about 100,000 Daltons. The R₁ group may include a polyether, a polyester, or a polysiloxane. The R₁ group may include the structure (denoted as Structure B):

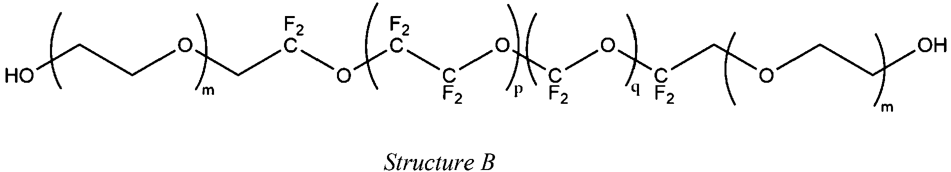

where m is from 1 to about 20, p is from about 5 to about 200, and q is from about 5 to about 200. The multifunctional isocyanate species may include toluene diisocyanate, isophorone diisocyanate, 4,4'-methylenebis(phenyl isocyanate), 4,4'-methylene-bis(cyclohexyl isocyanate), hexamethylene diisocyanate, poly(hexamethylene diisocyanate), poly(isophorone diisocyanate), or a combination thereof. The extended diol composition may include a reactive diluent may include an epoxy-functional group. The extended diol composition may include a curative such as a multifunctional amine group. A molar ratio of the multifunctional isocyanate species to the extended diol oligomer is from about 1.1 to about 10. Throughout the present disclosure, for purposes of clarity, the R₁, R₂, and R₃ groups are consistently defined as noted above in reference to *Structure A.*

In the present disclosure, the siloxane bond created during practicing the method herein, as a linkage preserves flexibility in the resulting chain backbone. The present method includes the fabrication of an extended diol oligomer comprised of one or more first components selected from diol oligomers having an average Mn of 500 to 5,000 g/mol, where the polyoligomers are α, ω hydroxyl terminated. A second component, selected from the diisocyanate species is also included.

Due to limitations in available molecular weights of many commercial oligomeric diols, there is a need for strategies to achieve higher molecular weight ranges in these materials while maintaining diol end group functionality and limiting modifications to backbone character. These higher molecular weight species allow formulators greater range in production of coatings, adhesives, elastomers and sealants that are lower modulus materials able to be achieved through the reduced crosslink density produced by longer diol precursors.

Molecular weight is a measure of the sum of the atomic weight values of the atoms in a molecule. Molecular weight is used in chemistry to determine stoichiometry in chemical reactions and equations. Molecular weight, abbreviated as M.W. or MW can be expressed in terms of g/mol, atomic mass units (amu) or Daltons (Da). Molecular weight can also be expressed as Mn, the number average molecular weight, which is calculated from the mole fraction distribution of different sized molecules in a sample, or Mw, the weight average molecular weight, which is calculated from the weight fraction distribution of different sized molecules.

Recent work has provided a generic strategy to controllably increase the number average molecular weight (Mn) of oligomeric diols, and specifically related to first component that is a diol oligomer and second component is a bisdimethylamino silane, having a molecular weight (Mn) of from about 500 to about 5,000 Da. The present disclosure describes the use of these extended oligomeric diols in epoxy and urethane compositions to create elastomeric films. An example in this strategy is the use of a commercially available telechelic precursor of approximately MW=1,800 Da with a HO-PEG-PFPE-PEG-OH (Fluorolink^{™} E10H, Synesqo) structure. Extension of this structure can achieve a range of precursor weights from about 1,800 to about 100,000 Daltons with the structure HO-(PEG-PFPE-PEG-O-X-O-PEG-PFPE-PEG) n -OH where X=-Si(CH3)₂-, or where X represents a silicon having other substituents as noted herein, where PEG refers to a poly(ethylene glycol) repeat unit and PFPE refers to a perfluoropolyether repeat unit, and wherein n is a number from about 1 to about 50, or from about 1 to about 12, or from about 1 to about 6.

Such higher molecular weight diols, having an average Mn of from about 2,000 to about 100,000 Da, can be incorporated into urethane or urea through reaction with isocyanates. Moreover, epoxy amine networks are possible through reaction of the extended diols with diisocyanates followed by modification to an epoxy end group. While many commercial oligomeric diols are produced in the range of 500 - 5,000 Daltons, and these precursors are often used in coatings, adhesives, sealants and elastomers, the extension to longer molecular weight diols is desirable in order to create more flexible materials through lowered crosslink density that would not be achievable with the unextended precursor.

Due to limitations in the available molecular weights of many commercial oligomeric diols, there is a need for strategies to achieve higher molecular weight ranges in these materials while maintaining diol end group functionality and limiting modifications to backbone character. These higher molecular weight species allow formulators greater range in production of coatings, adhesives, elastomers and sealants that are lower modulus materials able to be achieved through the reduced crosslink density produced by longer diol precursors. As shown in reaction Scheme 1 below, a broad scope of this work can include the use of the extended oligomer diol product in Scheme 1 for formulation into compositions incorporating urethane/urea and epoxy/amine functional polymer networks.

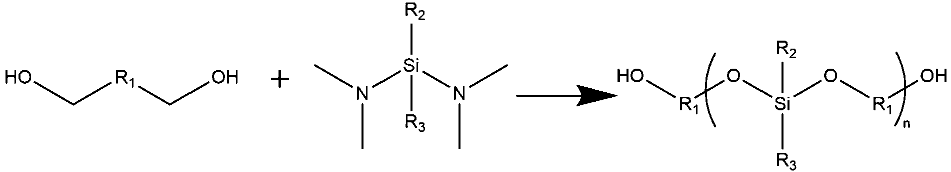

### Scheme 1 - Fundamental reaction producing extended diol oliogmers

The broadest scope of this disclosure is use of the extended oligomer diol product in Scheme 1 for formulation into urethane/urea and epoxy/amine polymer networks. R₁, R₂, R₃, and n have been defined and described in regard to *Structure A* previously. Another exemplary example can include the use of a commercial telechelic precursor, also referred to as a linear oligomer or low-molecular weight linear polymer having functional groups on both chain ends, based on a HO-PEG-PFPE-PEG-OH structure, as shown in Scheme 2, where m is from about 1 to about 20, or about 1 to about 18, p=q and is about 5 to about 50, or about 5 to about 45 and has molecular weight range of from about 1000 to about 10000 Daltons.

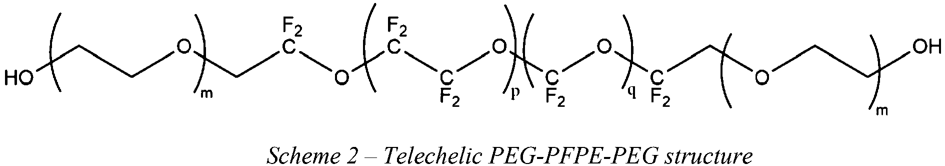

FIG. 1A depicts an application of a structural component including an exemplary extended diol composition applied to an aerospace vehicle. FIG. 1B is an exploded view of a portion of the aerospace vehicle of FIG. 1A, in accordance with the present disclosure. An application of the presently disclosed method and composition is shown on an aerospace vehicle 100, whereby vehicle substrate 130 is applied with the presently disclosed extended diol composition. Exploded view FIG. 1B is shown, having vehicle substrate 130 or surface thereof with an optional substrate anodized or primer layer 132 and a sealing layer 134 on a surface of the substrate 130, and/or onto a structural component of or onto a portion of a vehicle. In one example the application of the presently disclosed coating composition is directed to an external surface of the aerospace vehicle 100. In examples, additional coating layers, such as paints, coatings, or other protective coatings can be applied upon the sealing layer 134, internally or externally. While an exemplary example of an external substrate or surface of the aerospace vehicle 100 is shown herein, it is intended as a non-limiting example. There may further be other structural applications or areas in an aerospace vehicle 100 or other structure or vehicle where extended diol compositions or coatings thereof may be used, such as seals or gaskets, such as o-rings, or similar applications.

### Applications to Urethane/Urea Polymer Networks

Coupling of the extended diol oligomers shown herein, which can be further characterized as α,ω hydroxyl terminated diol oligomers, with isocyanates will form polyurethane linkages. Diisocyanates having a functionality of two isocyanate end groups (f=2) coupled with the extended diol oligomers will form linear chains, while trifunctional and greater isocyanates (f ≥ 3) will tend to produce branched and cross linked networks. Coupling of diols and diisocyanates can produce thermoplastic materials with a characteristic ability to flow and melt under adequate temperature and stress. Branched species (f ≥ 3) incorporated into the formulation can form or create a thermoset material that resists flow and deformation with higher temperature and stress.

Overall network topology of the described polymer networks can be dependent on the functionality of precursor species and the order of addition. This can take the form of a 'one-shot' approach where all precursors are mixed and reacted at once. Alternatively, a prepolymer strategy is often employed, where linear chain segments are synthesized using diol and an excess of diisocyanate. These excess isocyanate groups are later combined with a stoichiometric equivalent of alcohol groups to fully react the functional groups in the system, as shown below in Scheme 3.

Common isocyanate species employed in these systems can be or include diisocyanates (f=2) including toluene diisocyanate, isophorone diisocyanate, 4,4'-methylenebis(phenyl isocyanate), 4,4'-Methylene-bis(cyclohexyl isocyanate), hexamethylene diisocyanate, and the like, or combinations thereof. Higher functionality isocyanates can also be incorporated (f ≥ 3) including poly(hexamethylene diisocyanate), poly(isophorone diisocyanate), poly(methylenediphenyl isocyanate), and the like, or combinations thereof. The multifunctionality of these diisocyanates may be achieved through various chemical structures and molecular arrangements that enable them to react with multiple functional groups on the extended diol oligomers, thereby forming complex networks, which can provide improved thermal stability and mechanical strength due to the incorporated rigid molecular structure. In addition to these specific examples, other multifunctional diisocyanate species may be used to provide improved chemical resistance and thermal stability.

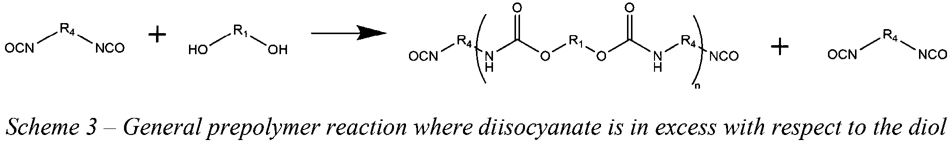

Curing of the one-shot or prepolymer precursor with isocyanate reactive groups can be accomplished with multifunctional (f ≥ 2) alcohols to produce urethane linkages. Alternatively, multi-functional amines (f ≥ 2) can be used to produce urea linkages. However, the rapid kinetics of this reaction limit its utility. In scheme 3, R₁ represents the multifunctional diol oligomer described previously, while R₄ represents the interior of the diisocyanate as described herein, for example, diisocyanates (f=2) including toluene diisocyanate, isophorone diisocyanate, 4,4'-methylenebis(phenyl isocyanate), 4,4'-Methylene-bis(cyclohexyl isocyanate), hexamethylene diisocyanate, and the like, or combinations thereof. Higher functionality isocyanates can also be incorporated (f ≥ 3) including poly(hexamethylene diisocyanate), poly(isophorone diisocyanate), poly(methylenediphenyl isocyanate), and the like, or combinations thereof, where n in Scheme 3 above is from 2 to about 100, or from about 2 to 200.

### Applications to Epoxy/Amine Polymer Networks

Epoxy/amine polymer networks can be produced beginning with the similar prepolymer strategy described earlier (Scheme 3). This initial step is then followed by conversion of the isocyanate end groups to epoxy through the reaction of epoxide reagent containing an R₅, in Scheme 4 below, wherein R₅ is for example, primary alcohol groups, 2,2-di(oxiran-2-yl)ethan-1-ol, 2,2,2-tri(oxiran-2-yl)ethan-1-ol, (4-(oxiran-2-yl)phenyl)methanol, (7-oxabicyclo[4.1.0]heptan-3-yl)methanol, 6-(oxiran-2-yl)hexan-1-ol, 2,2-bis((oxiran-2-ylmethoxy)methyl)butan-1-ol, 2-methyl-3-(oxiran-2-ylmethoxy)-2-((oxiran-2-ylmethoxy)methyl)propan-1-ol, glycidol, glycidamide, or combinations thereof, and n is from 2 to about 100, or about 2 to about 200.

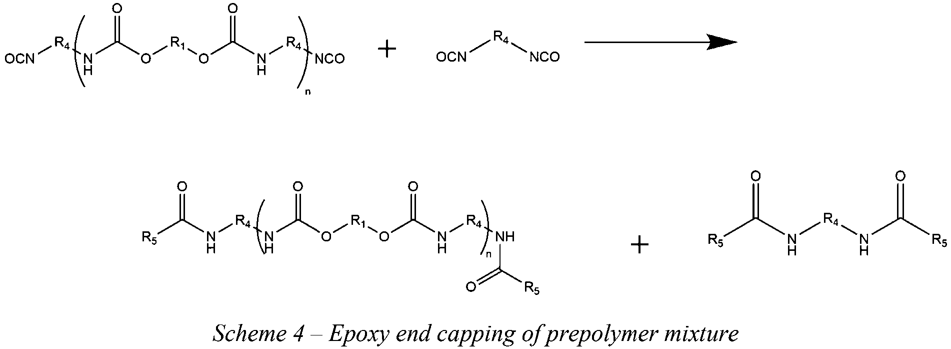

R₁, R₄ and R₅ have been described previously in Scheme 3, and n in Scheme 4 above is from about 2 to about 100. Following a conversion using epoxy reactive diluents, low viscosity epoxy functional molecules having a functional group number of from about 1 to about 6, (f=1-6), can optionally be added to reduce viscosity and increase crosslinking of the network. Examples include n-Butyl Glycidyl Ether, n-Butyl Glycidyl Ether, Cresyl Glycidyl Ether, 2-Ethyl Hexyl Glycidyl Ether, Alkyl (C8-C13) Glycidyl Ether, p-Tertiary Butyl Phenol Glycidyl Ether, Neodecanoic Acid Glycidyl Ester, Neopentyl Glycol Diglycidyl Ether, 1,4-Butanediol Diglycidyl Ether, Cyclohexane Dimethylol Diglycidyl Ether, Propylene Glycol Diglycidyl Ether, Resorcinol Diglycidyl Ether, Glycerol Triglycidyl Ether, Trimethylol Propane Triglycidyl Ether, and the like, or combinations thereof. Curing of the epoxy amine networks can alternatively be carried out by multifunctional amines. Examples of multifunctional amines can include triethylene tetraamine, diethylene triamine, tetraethylene pentamine, triaminononane (Hexatran), and the like, or combinations thereof.

In another example, the extended diol oligomer can be synthesized using a combination of PEG-PFPE-PEG segments and siloxane units. This approach allows for greater flexibility in tailoring molecular weight distribution and end-group functionality. For instance, varying reaction conditions such as temperature or catalyst type may also influence chain length and branching patterns. In yet another example, the extended diol oligomer can be synthesized using a combination of PEG-PFPE-PEG segments with polyester-based units containing hydroxyl groups at both ends. This approach enables creation of telechelic precursors having multiple functional end-groups. The properties and applications of these materials may be further tailored by incorporating additional components, such as siloxane or polysiloxane moieties. While some examples described herein are noted as telechelic oligomers or materials, the diols need not be telechelic. In some examples, the extended diol composition can include wherein the R₁ group as shown in Structure A includes a polyether, a polyester, or a polysiloxane. Commercial polyesters, polyethers or polysiloxanes having alcohol end groups, in some examples combined with diamine silane linking groups, can be extended as well in similar reactions as described in the present disclosure. In the preceding examples, molar ratio of the second component to the first component is from about 0.01:1 to about 0.99:1 in the final extended diol composition. In other examples, ratios of from about 0.7 to about 0.9 are applicable. Exemplary extended diol compositions having first and second components can have a number average molecular weight Mn from about 1000 to about 10, 000, or from about 1000 to about 20,000 and from about 1000 to about 100,000, where n (of *Structure A)* is from about 1 to about 10, or from about 1 to about 20, or from about 1 to about 100, where the n corresponds to the appropriate Mn.

In one example, polyoxypropylene glycol (POP) may be used as an exemplary multifunctional aliphatic diol with two hydroxyl groups per molecule, allowing for the formation of branched or cross-linked networks upon reaction with isocyanates. Another example includes polyester-based diol oligomers synthesized through condensation reactions between a polyethylene terephthalate (PET) backbone and an ethylene glycol chain extender, resulting in molecules containing multiple hydroxyl groups per molecule.

The extended diol composition can include one or more catalysts. As used herein, the term "catalyst" can refer to any component, compound, or substance that can increase the rate of a chemical reaction related to sealant crosslinking, without necessarily undergoing a permanent chemical change. The catalyst can be or include, but is not limited to, tin-based compounds such as dibutyltin dilaurate, which has been found to promote faster curing rates while maintaining good mechanical properties. Another example employs stannous octanoate, a commonly used catalyst in polyurethane synthesis that exhibits similar benefits. Additionally, metal-free initiators like zinc acetate and titanium dioxide may be employed for their ability to facilitate the reaction without introducing unwanted impurities. In another example, organometallic compounds such as ferrocene or cobaltocene are useful alternatives due to their high reactivity with isocyanates. For some examples, a combination of tin-based and metal-free initiators may be used in tandem. In yet another example, the reaction mixture may include small amounts of additives such as triphenylphosphine or tris(triphenyl phosphite) to enhance catalyst activity while minimizing unwanted side reactions.

In some examples, the reaction conditions may be optimized by adjusting factors such as temperature, pressure, and stoichiometry of reactants. For instance, increasing the concentration of catalyst or modifying its structure through chemical modification may lead to improved reactivity while maintaining good mechanical performance. Similarly, varying the type and amount of solvent used in the extension process may influence reaction rates without compromising material properties.

The addition of useful UV stabilizers to these extended diol oligomers may further enhance their thermal stability and resistance against degradation caused by exposure to ultraviolet light. In one example, the UV stabilizer may be incorporated into the formulation as an additive in amounts ranging from 0.1% to 5%, preferably between 0.2% to 3%. Useful examples of such additives include hindered amine-based compounds like bis(2a-ethyl-hexyl-p-cresol) piperidine, octadecanoic acid (C18), and diisooctyl phthalate; phenolic antioxidants like butylated hydroxytoluene (BHT); sulfurcontaining additives such as diphenyldithiophosphoric acid esters or dilauryl thiodipropionate. In another example, the UV stabilizer may be covalently bonded to the telechelic precursor through a reaction with an epoxy group on one end of the molecule and an amine functional group on the other, an approach which may provide enhanced stability against degradation caused by exposure to heat or light. In yet another example, the UV stabilizers may comprise metal complexes containing transition metals like copper (Cu), zinc (Zn) or iron (Fe); these compounds have been shown to exhibit useful photostabilizing properties. For example, a Cu-based complex comprising 2-(4-methoxyphenyl)-5-tert-butylimidazole and its derivatives has demonstrated excellent UV stability in various applications. The UV stabilizers may be incorporated into the formulation as part of an oligomeric or polymeric structure, which can provide enhanced thermal resistance against degradation caused by exposure to heat.

In yet another example, the UV stabilizers may be used in combination with other additives like antioxidants or fillers, which can provide enhanced thermal stability against degradation caused by exposure to heat. The optional addition of anti-oxidant species to these materials may be useful in enhancing their thermal stability and resistance against degradation over time. In one example, the antioxidant may comprise phenolic compounds such as BHT or Irganox 1010, which are commonly used in polyurethane formulations due to their ability to scavenge free radicals and prevent chain reactions that lead to material breakdown. Another useful anti-oxidant can include a hindered amine light stabilizer (HALS), particularly those with a molecular weight of around 500 Da or less, such as Tinuvin P or Cyasorb UV5411, which may effectively absorb ultraviolet radiation and neutralize free radicals before they cause damage to the material in adverse conditions. In some cases, anti-oxidants may be incorporated into the formulation in combination with other additives like UV stabilizers (e.g., benzophenone-based compounds) for enhanced protection against degradation caused by exposure to light or heat. In another example, antioxidants may include metal chelates such as ferrocene derivatives, phosphites (e.g., tris(2-chloroethyl)phosphite), and the like. Alternate antioxidants can include extracts or oils derived from plants such as rosemary extract, green tea extract, or pomegranate oil. Combinations of any of the aforementioned antioxidants or stabilizers can be used.

The pigmentation of extended diol oligomer-based materials may be achieved through various methods and examples to produce useful coloration effects in coatings, adhesives, sealants, or elastomers. One example involves incorporating pigment particles into one or more of the precursor solutions before extension reaction with monomers, allowing for uniform dispersion throughout the material matrix. Another approach is to add pigments after synthesis of extended diol oligomer and prior to curing reactions, enabling targeted coloration in specific regions of a composite structure or film formation process. Useful pigmentation methods include solvent-based dispersions, emulsions, suspensions, or even nanoscale particle dispersion techniques like sonication-assisted mixing. For instance, titanium dioxide (TiO2) may be used to create white pigmentations while carbon black and iron oxide may produce gray or red colors. Other pigments, such as ultramarine blue, cadmium sulfide reds, and chrome yellow pigments or combinations thereof can be used.

In yet another example, graphene sheets or other electrically conductive materials are used as filler materials to enhance electrical conductivity in these extended diol oligomers. The high surface area-to-volume ratio of graphene enables efficient charge transfer between particles, resulting in improved thermal stability and reduced resistivity of the final material. In this case, graphene flakes may be added during extension reaction or curing process. Alternatively, MWNTs or other conductive fillers can be used. The combination of different types of conductive filler particles in various ratios to achieve optimal performance characteristics depending on specific application requirements. For example, a combination of carbon-based fillers and metal oxide nanoparticles may provide both high electrical conductivity and thermal stability. In examples, the aforementioned thermally or electrically conductive fillers can be added to the extended diol compositions at a level of from about 0.5 weight % to about 50 weight %, or from about 1 weight % to about 30 weight %, from about 5 weight % to about 20 weight %, or from about 10 weight % to about 15 weight %, based on a weight of filler compared to a total weight of the extended diol composition.

The process of forming polyurethane networks by reacting extended diol oligomers with multifunctional isocyanate species involves several steps and considerations. Initially, it may be desirable to dissolve the telechelic precursor in a suitable solvent or mixture thereof before adding one or more multifunctional isocyanates. The molar ratio of the diisocyanate component may vary widely depending on desired properties such as curing rate, viscosity, and mechanical strength; for example, using 1:1.1 to 10 mole ratios has been found useful in certain examples, with the diisocyanate in excess in the reaction. In some cases, it may be advantageous to add a catalyst or initiator compound to facilitate the reaction process.

Extended diol compositions of the present disclosure can include a first component comprising an α,ω hydroxyl terminated diol oligomer having a number average molecular weight Mn of from about 500 g/mol to about 100,000 g/mol or about 1,000 to about 100,000 or about 1,000 to about 10,000, a multifunctional isocyanate species, and a multifunctional alcohol or amine species, wherein the α,ω hydroxyl terminated diol oligomer has the structure (*Structure A*):

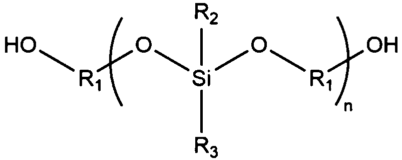

In examples, the R₂ and R₃ groups comprise methyl groups, ethyl groups, propyl groups, isopropyl groups, phenyl groups, or a combination thereof, while the R₁ group comprises a polyether, a polyester, or a polysiloxane. The n is defined by the molecular weight noted above, and dependent on the molecular weight of the R₁ unit. A reasonable range would be n=1 to about 10, n=1 to about 20 or n=1 to about 100, or n is from about 2 to about 200 assuming R₁ molecular weight is, for example, 1000 Da. In other examples, the R₁ group of the extended diol composition comprises the structure:

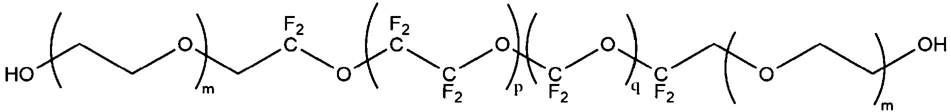

Where m is from about 1 to about 20, p is from about 5 to about 200, and q is from about 5 to about 200. In examples, the multifunctional isocyanate species comprises toluene diisocyanate, isophorone diisocyanate, 4,4'-methylenebis(phenyl isocyanate), 4,4'-Methylene-bis(cyclohexyl isocyanate), hexamethylene diisocyanate, poly(hexamethylene diisocyanate), poly(isophorone diisocyanate), or a combination thereof. A molar ratio of the multifunctional isocyanate species to the extended diol oligomer is from about 1.1 to about 10, or from about 1.1 to about 5. An optional catalyst can be included in any of the compositions described herein, such as a tin-based catalyst, such as dibutyl tin dilaurate or stannous octanoate. In some examples, the extended diol composition can include a UV stabilizer, an anti-oxidant, a pigment, or a combination thereof. The multifunctional alcohol or amine species can include an amine and wherein the amine comprises triethylene tetraamine, diethylene triamine, tetraethylene pentamine, triaminononane, an aspartate ester, a polycarbamide curative, or a combination thereof.

Alternate examples of the extended diol composition of the present disclosure can include a first component comprising an α,ω hydroxyl terminated diol oligomer having a number average molecular weight Mn of from about 500 Da to about 100,000 Da or about 1,000 Da to about 100,000 Da or about 2,000 Da to about 100,000 Da, a multifunctional isocyanate species, and a multifunctional species comprising an alcohol-functional group and an epoxy-functional group, and wherein the α,ω hydroxyl terminated diol oligomer has a structure (*Structure A*):

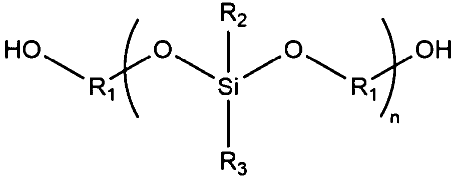

In examples of the extended diol composition of Structure A, the R₂ and R₃ groups comprise methyl groups, ethyl groups, propyl groups, isopropyl groups, phenyl groups, or a combination thereof, and the R₁ group can include a polyether, a polyester, or a polysiloxane. The n is defined by the molecular weight noted above, and dependent on the molecular weight of the R₁ unit. A reasonable range would be n=1 to about 10, n=1 to about 20 or n=1 to about 100, or n is from about 2 to about 200, assuming R₁ molecular weight is, for example, 1000. In examples, the R₁ group comprises the structure:

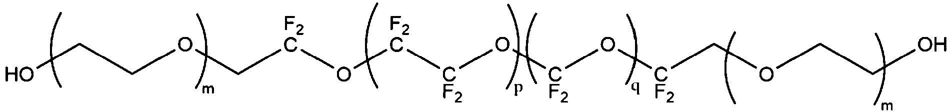

Where m is from about 1 to about 20, p is from about 5 to about 200, and q is from about 5 to about 200. The multifunctional isocyanate species of the extended diol composition can include toluene diisocyanate, isophorone diisocyanate, 4,4'-methylenebis(phenyl isocyanate), 4,4'-Methylene-bis(cyclohexyl isocyanate), hexamethylene diisocyanate, poly(hexamethylene diisocyanate), poly(isophorone diisocyanate), or a combination thereof. In examples, the extended diol composition can include a diluent comprising an epoxy-functional group or a curative comprising a multifunctional amine group. A molar ratio of the multifunctional isocyanate species to the extended diol oligomer is from about 1.1 to about 10 or from about 1.1 to about 5.

Methods of making a resin as described herein can include providing a diol oligomer to a reaction vessel, the diol oligomer comprising an α,ω hydroxyl terminated diol oligomer having a number average molecular weight Mn of from about 500 g/mol to about 100,000 g/mol or 1,000 to about 100,000 or 2,000 to about 100,000, adding a diisocyanate compound to the reaction vessel in a molar ratio of the diisocyanate compound to the α,ω hydroxyl terminated diol oligomer of about 1.1 to about 10, and heating the diol oligomer and the diisocyanate compound in an inert atmosphere at a temperature of from about 50 to about 110°C for about 1 hour to about 2 hours, and wherein the diol oligomer comprises [-O-Si(R₂,R₃)-O-]. This diol oligomer can include where R₂ and R₃ are similar or the same as what has been described previously in regard to *Structure A.* In examples, the diol oligomer can be dissolved in a solvent at any stage of the process. The method can further include adding a multifunctional alcohol to the reaction vessel at a temperature of 100°C, wherein the multifunctional alcohol comprises at least three alcohol functional groups. In examples, the method can include adding a reactive epoxy or a reactive diluent to the reaction vessel or adding a multifunctional species comprising an alcohol-functional group and an epoxy-functional group to the reaction vessel.

Polymer networks based on extended diol compositions can alternatively be comprised of an extended diol oligomer having an average Mn 2,000 to 100,000 Da where said oligomers are α,ω hydroxyl terminated with the structure (*Structure A*):

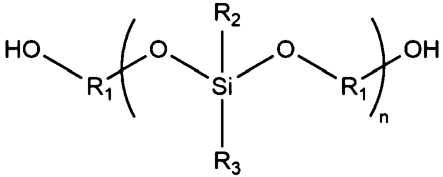

The extended diol composition can include where the R₂ and R₃ groups of *Structure A* may include methyl groups, ethyl groups, propyl groups, isopropyl groups, phenyl groups, or a combination thereof, and where n is from 1 to about 20. The R₁ group may include a polyether, a polyester, or a polysiloxane. The R₁ group may include the structure: 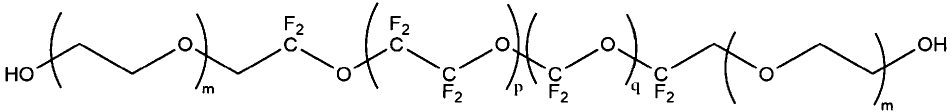 where m is from about 1 to about 20 and p and q are from about 5 to about 200. Additionally, one or more multifunctional isocyanate species, one or more multifunctional alcohol or amine species can be included in the composition. Optionally, a catalyst can be included in the composition, such as triethylene tetraamine, diethylene triamine, tetraethylene pentamine, triaminononane (Hexatran) or within the class of aspartate esters or polycarbamide curatives, or combinations thereof. Optional reactive epoxy diluents or one or more species of multifunctional amine curatives can also be incorporated into the polymer network. An exemplary species with an alcohol and epoxy group can include glycidol or other similar materials. Multifunctional amine curatives can include triethylene tetraamine, diethylene triamine, tetraethylene pentamine, triaminononane (Hexatran), or combinations thereof. In examples, the resin or polymer network can be provided or fabricated as a two-part kit to be mixed at a time after making or formulating.

It will be appreciated that R₂ and R₃ groups described throughout as comprising methyl groups, ethyl groups, propyl groups, isopropyl groups, phenyl groups, or a combination thereof include R₂ and R₃ groups wherein R₂ and R₃ are, independently, methyl, ethyl, propyl, isopropyl, phenyl, or a chemical moiety including a combination of these groups, such as a benzyl or phenylmethyl. R₂ and R₃ may, independently, be methyl, ethyl, propyl, isopropyl or phenyl.

The number average molecular weight (Mn) of a α,ω hydroxyl terminated diol oligomer as described throughout this disclosure may be determined, for example, by using an isocyanate titration method. In such a method the α,ω hydroxyl terminated diol oligomer under analysis is first converted to a prepolymer with excess diisocyanate (typically targeting 2 - 3x excess of NCO to OH). Number average molecular weight of the α,ω hydroxyl terminated diol oligomer is determined by obtaining %NCO content of the prepolymer using a method according to ASTM D2572-19. Moles of NCO in the prepolymer mixture are obtained by multiplying NCO% with total solids of the prepolymer mix under analysis and dividing by the formula weight of NCO (42 g/mol). This value is then subtracted from the original amount of NCO added to create the prepolymer giving the number of NCO units reacted away in the prepolymer formation. This is equivalent to the moles of OH end groups in the α,ω hydroxyl terminated diol oligomer under analysis. The total mass of the α,ω hydroxyl terminated diol oligomer divided by the molar concentration of OH end groups gives the OH equivalent weight. OH end group fidelity of the diol is assumed and the number average chain length is multiplied by a factor of two to arrive at the number average molecular weight (Mn) of a α,ω hydroxyl terminated diol oligomer.

While the present teachings have been illustrated with respect to one or more implementations, alterations and/or modifications may be made to the illustrated examples without departing from the scope of the appended claims. For example, it may be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings. It may be appreciated that structural objects and/or processing stages may be added, or existing structural objects and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein. The term "conformal" describes a coating material in which angles of the underlying material are preserved by the conformal material. The term "about" indicates that the value listed may be somewhat altered, as long as the alteration does not result in nonconformance of the process or structure to the illustrated embodiment. The terms "couple," "coupled," "connect," "connection," "connected," "in connection with," and "connecting" refer to "in direct connection with" or "in connection with via one or more intermediate elements or members." Finally, the terms "exemplary" or "illustrative" indicate the description is used as an example, rather than implying that it is an ideal. Other embodiments of the present teachings may be apparent to those skilled in the art from consideration of the specification and practice of the disclosure herein. It is intended that the specification and examples be considered as exemplary only, with a true scope of the present teachings being indicated by the following claims.

### Clauses

1. An extended diol composition, comprising:
   a first component comprising an α,ω hydroxyl terminated diol oligomer having a number average molecular weight Mn of from about 500 Da to about 100,000 Da;
   a multifunctional isocyanate species; and
   a multifunctional alcohol or amine species; and wherein:
      the α,ω hydroxyl terminated diol oligomer has a structure: 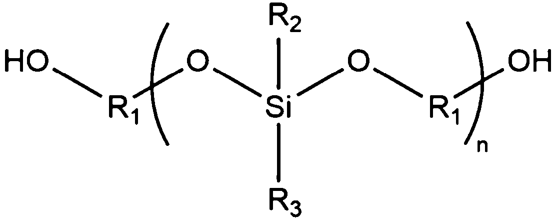
         R₁ comprises a polyether, a polyester, or a polysiloxane; and
         R₂ and R₃ groups comprise methyl groups, ethyl groups, propyl groups, isopropyl groups, phenyl groups, or a combination thereof; and
         n is from about 1 to about 100.
2. The extended diol composition of clause 1, wherein the R₁ group comprises the structure: 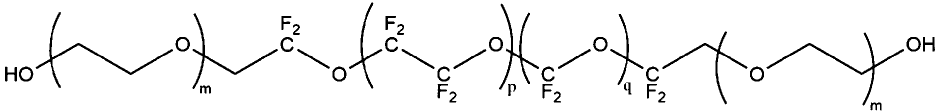 ; and wherein:
   m is from about 1 to about 20;
   p is from about 5 to about 200; and
   q is from about 5 to about 200.
3. The extended diol composition of clause 1 or 2, wherein the multifunctional isocyanate species comprises toluene diisocyanate, isophorone diisocyanate, 4,4'-methylenebis(phenyl isocyanate), 4,4'-Methylene-bis(cyclohexyl isocyanate), hexamethylene diisocyanate, poly(hexamethylene diisocyanate), poly(isophorone diisocyanate), or a combination thereof.
4. The extended diol composition of any one of clauses 1 to 3, wherein a molar ratio of the multifunctional isocyanate species to the extended diol oligomer is from about 1.1 to about 10.
5. The extended diol composition of any one of clauses 1 to 4, further comprising a catalyst.
6. The extended diol composition of clause 5, wherein the catalyst comprises a tin-based catalyst.
7. The extended diol composition of clause 5 or 6, wherein the catalyst comprises dibutyl tin dilaurate or stannous octanoate.
8. The extended diol composition of any one of clauses 1 to 7, further comprising a UV stabilizer, an anti-oxidant, a pigment, or a combination thereof.
9. The extended diol composition of any one of clauses 1 to 8, wherein the multifunctional alcohol or amine species comprises an amine and wherein the amine comprises triethylene tetraamine, diethylene triamine, tetraethylene pentamine, triaminononane, an aspartate ester, a polycarbamide curative, or a combination thereof.
10. An extended diol composition, comprising:
   a first component comprising an α,ω hydroxyl terminated diol oligomer having a number average molecular weight Mn of from about 500 Da to about 100,000 Da;
   a multifunctional isocyanate species; and
   a multifunctional species comprising an alcohol-functional group and an epoxy-functional group; and wherein:
      the α,ω hydroxyl terminated diol oligomer has a structure: 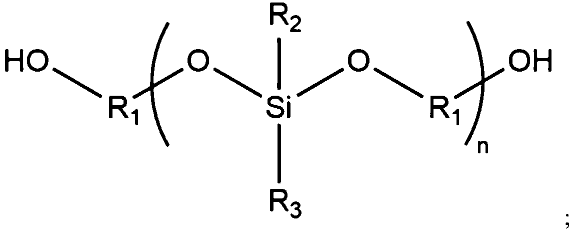
      R₁ comprises a polyether, a polyester, or a polysiloxane; and
      R₂ and R₃ groups comprise methyl groups, ethyl groups, propyl groups, isopropyl groups, phenyl groups, or a combination thereof; and
      n is from about 1 to about 100.
11. The extended diol composition of clause 10, wherein the R₁ group comprises the structure: 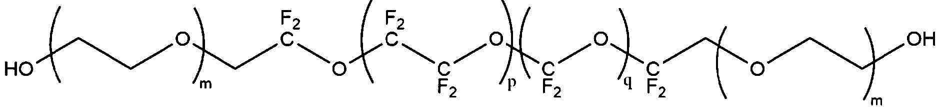 ; and wherein:
   m is from about 1 to about 20;
   p is from about 5 to about 200; and
   q is from about 5 to about 200.
12. The extended diol composition of clause 10 or 11, wherein the Mn is from about 1,000 Da to about 10,000 Da.
13. The extended diol composition of any one of clauses 10 to 12, wherein the multifunctional isocyanate species comprises toluene diisocyanate, isophorone diisocyanate, 4,4'-methylenebis(phenyl isocyanate), 4,4'-Methylene-bis(cyclohexyl isocyanate), hexamethylene diisocyanate, poly(hexamethylene diisocyanate), poly(isophorone diisocyanate), or a combination thereof.
14. The extended diol composition of any one of clauses 10 to 13, further comprising a reactive diluent comprising an epoxy-functional group.
15. The extended diol composition of any one of clauses 10 to 14, further comprising a curative comprising a multifunctional amine group.
16. The extended diol composition of any one of clauses 10 to 15, wherein a molar ratio of the multifunctional isocyanate species to the extended diol oligomer is from about 1.1 to about 10.
17. A method of making a resin, comprising:
   providing a diol oligomer to a reaction vessel, the diol oligomer comprising an α,ω hydroxyl terminated diol oligomer having a number average molecular weight Mn of from about 500 Da to about 100,000 Da;
   adding a diisocyanate compound to the reaction vessel in a molar ratio of the diisocyanate compound to the α,ω hydroxyl terminated diol oligomer of about 1.1 to about 10; and
   heating the diol oligomer and the diisocyanate compound in an inert atmosphere at a temperature of from about 50 to about 110°C for about 1 hour to about 2 hours; and wherein:
      the diol oligomer comprises [-O-Si(R₂,R₃)-O-]; and
      the R₂ and R₃ groups may include methyl groups, ethyl groups, propyl groups, isopropyl groups, phenyl groups, or a combination thereof.
18. The method of making a resin of clause 17, further comprising dissolving the diol oligomer in a solvent.
19. The method of making a resin of clause 17 or 18, further comprising adding a multifunctional alcohol to the reaction vessel at a temperature of 100°C, wherein the multifunctional alcohol comprises at least three alcohol functional groups.
20. The method of making a resin of any one of clauses 17 to 19, further comprising adding reactive epoxy diluents to the reaction vessel.

## Claims

1. An extended diol composition, comprising:
a first component comprising an α,ω hydroxyl terminated diol oligomer having a number average molecular weight Mn of from about 500 Da to about 100,000 Da;
a multifunctional isocyanate species; and
a multifunctional alcohol or amine species; and wherein:
the α,ω hydroxyl terminated diol oligomer has a structure: 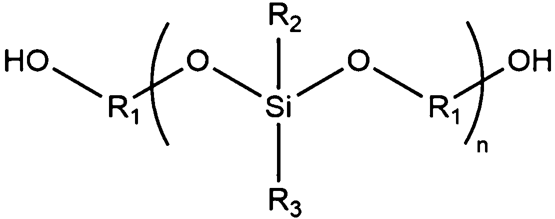
R₁ comprises a polyether, a polyester, or a polysiloxane; and
R₂ and R₃ groups comprise methyl groups, ethyl groups, propyl groups, isopropyl groups, phenyl groups, or a combination thereof; and
n is from about 1 to about 100.

2. The extended diol composition of claim 1, wherein the R₁ group comprises the structure: 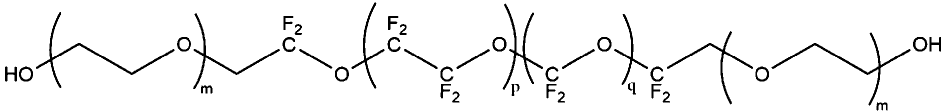 ; and wherein:
m is from about 1 to about 20;
p is from about 5 to about 200; and
q is from about 5 to about 200.

3. The extended diol composition of claim 1 or 2, wherein the multifunctional isocyanate species comprises toluene diisocyanate, isophorone diisocyanate, 4,4'-methylenebis(phenyl isocyanate), 4,4'-Methylene-bis(cyclohexyl isocyanate), hexamethylene diisocyanate, poly(hexamethylene diisocyanate), poly(isophorone diisocyanate), or a combination thereof.

4. The extended diol composition of any one of claims 1 to 3, wherein a molar ratio of the multifunctional isocyanate species to the extended diol oligomer is from about 1.1 to about 10.

5. The extended diol composition of any one of claims 1 to 4, further comprising a catalyst; optionally wherein the catalyst comprises a tin-based catalyst; optionally wherein the catalyst comprises dibutyl tin dilaurate or stannous octanoate.

6. The extended diol composition of any one of claims 1 to 5, further comprising a UV stabilizer, an anti-oxidant, a pigment, or a combination thereof.

7. The extended diol composition of any one of claims 1 to 6, wherein the multifunctional alcohol or amine species comprises an amine and wherein the amine comprises triethylene tetraamine, diethylene triamine, tetraethylene pentamine, triaminononane, an aspartate ester, a polycarbamide curative, or a combination thereof.

8. An extended diol composition, comprising:
a first component comprising an α,ω hydroxyl terminated diol oligomer having a number average molecular weight Mn of from about 500 Da to about 100,000 Da;
a multifunctional isocyanate species; and
a multifunctional species comprising an alcohol-functional group and an epoxy-functional group; and wherein:
the α,ω hydroxyl terminated diol oligomer has a structure: 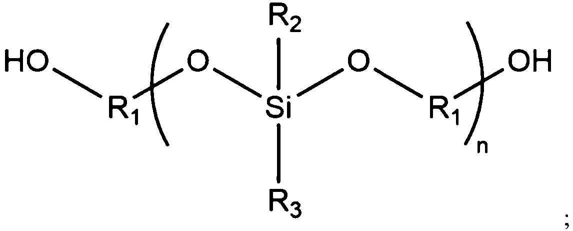
R₁ comprises a polyether, a polyester, or a polysiloxane; and
R₂ and R₃ groups comprise methyl groups, ethyl groups, propyl groups, isopropyl groups, phenyl groups, or a combination thereof; and
n is from about 1 to about 100.

9. The extended diol composition of claim 8, wherein the R₁ group comprises the structure: 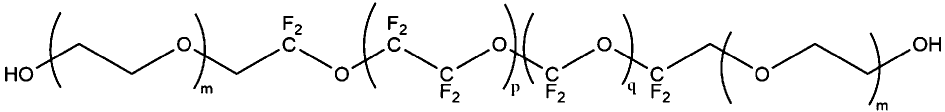 ; and wherein:
m is from about 1 to about 20;
p is from about 5 to about 200; and
q is from about 5 to about 200.

10. The extended diol composition of claim 8 or 9, wherein the Mn is from about 1,000 Da to about 10,000 Da.

11. The extended diol composition of any one of claims 8 to 10, wherein the multifunctional isocyanate species comprises toluene diisocyanate, isophorone diisocyanate, 4,4'-methylenebis(phenyl isocyanate), 4,4'-Methylene-bis(cyclohexyl isocyanate), hexamethylene diisocyanate, poly(hexamethylene diisocyanate), poly(isophorone diisocyanate), or a combination thereof.

12. The extended diol composition of any one of claims 8 to 11, further comprising:
(a) a reactive diluent comprising an epoxy-functional group; and/or
(b) a curative comprising a multifunctional amine group.

13. The extended diol composition of any one of claims 8 to 12, wherein a molar ratio of the multifunctional isocyanate species to the extended diol oligomer is from about 1.1 to about 10.

14. A method of making a resin, comprising:
providing a diol oligomer to a reaction vessel, the diol oligomer comprising an α,ω hydroxyl terminated diol oligomer having a number average molecular weight Mn of from about 500 Da to about 100,000 Da;
adding a diisocyanate compound to the reaction vessel in a molar ratio of the diisocyanate compound to the α,ω hydroxyl terminated diol oligomer of about 1.1 to about 10; and
heating the diol oligomer and the diisocyanate compound in an inert atmosphere at a temperature of from about 50 to about 110°C for about 1 hour to about 2 hours; and wherein:
the diol oligomer comprises [-O-Si(R₂,R₃)-O-]; and
the R₂ and R₃ groups may include methyl groups, ethyl groups, propyl groups, isopropyl groups, phenyl groups, or a combination thereof.

15. The method of making a resin of claim 14, further comprising:
(a) dissolving the diol oligomer in a solvent; and/or
(b) adding a multifunctional alcohol to the reaction vessel at a temperature of 100°C, wherein the multifunctional alcohol comprises at least three alcohol functional groups; and/or
(c) adding reactive epoxy diluents to the reaction vessel.
